# EUROPEAN PATENT APPLICATION

(11) **EP 2 498 507 A2**
(43) Date of publication of application: **12.09.2012**
(21) Application number: 12157068.3
(22) Date of filing: 27.02.2012
(51) Int. Cl.: H04N 21/61, H04N 21/242

(54) **Video transmission device and control method thereof, and video reception device and control method thereof**

(30) Priority: 08.03.2011 JP 2011049856
(71) Applicant: Sony Corporation, Tokyo 108-0075 (JP)
(72) Inventor: Asaumi, Yoshiya, Tokyo, 108-0075 (JP)
(74) Representative: Körber, Martin Hans

(57) **Abstract**

An image transmission device which includes, a plurality of transmission terminals each of which has an encoder which performs encoding processing with respect to an input video signal, and transmits a video signal which is encoded; a time synchronization unit which synchronizes the plurality of transmission terminals; and a managing unit which receives connection information of reception terminals to be connected from a reception side, instructs connections by transmitting the connection information to the plurality of transmission terminals, informs the plurality of transmission terminals of an encoding start time, and informs the reception side of a decoding start time.

## Description

### BACKGROUND

The present technology relates to a video transmission device and control method thereof, and a video reception device and control method thereof, and particularly relates to a video transmission device for delivering a stereoscopic video signal, a high resolution video signal or the like using a plurality of lines, or the like.

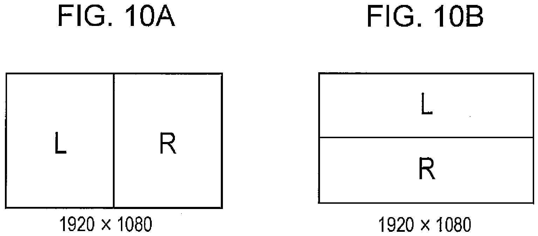

For example, a transmission method of a stereoscopic video signal using TV airwaves is proposed in Japanese Unexamined Patent Application Publication No. 2005-6114. As a transmission method of a stereoscopic video signal (3D video signal), there are the Side-by-Side method, the Top-and-Bottom method, and the like. Fig. 10A shows a Side-by-Side method, and Fig. 10B shows a Top-and-Bottom method.

For example, in the Side-by-Side method, pixel data for the left eye video signal is transmitted in the first half in the horizontal direction, and pixel data for the right eye video signal is transmitted in the second half in the horizontal direction. In this case, since pixel data in the horizontal direction is thinned out by 1/2, in the left eye video signal and right eye video signal, respectively, accordingly, a horizontal resolution with respect to the original signal is reduced to half. In addition, for example, in the Top-and-Bottom method, data of each line of the left eye video signal is transmitted in the first half in the vertical direction, and data of each line of the right eye video signal is transmitted in the second half in the vertical direction. In this case, since lines of the left eye video signal and right eye video signal are thinned out by 1/2, a vertical resolution with respect to the original signal is reduced to half.

### SUMMARY

It is considered to deliver a stereoscopic video signal by streaming through a WAN (Wide Area Network) line such as the Internet, or NGN (Next Generation Network). When a transmission method of the stereoscopic video signal is a Side-by-Side method, or a Top-and-Bottom method, it is easy to synchronize a left eye video signal with a right eye video signal, and further, it is possible to transmit using one line, since the data amount is suppressed.

However, as described above, it is difficult to obtain a high quality stereoscopic image on the reception side in these transmission methods, since the resolution in the horizontal direction, or the resolution in the vertical direction becomes half with respect to the original signal. Therefore, for example, it is considered that a left eye video signal and a right eye video signal with a resolution of full HD (1920 x 1080) are to be streamed using two lines. In this case, the synchronization of the left and right eye video signals becomes a problem.

In addition, in general, the above described problem of synchronization similarly occurs when a plurality of video signals which are necessary for displaying a predetermined image, and are related to each other is streamed using a plurality of lines. For example, it may be the case where a high resolution video signal of 4K2K is divided into four video signals with the resolution of full HD (1920 x 1080), and are streamed using four lines.

It is desirable to solve the problem of synchronization when a plurality of video signals is streamed using a plurality of lines.

Various aspects and features of the invention are defined in the appended claims.

An image transmission device according to an embodiment of the present technology which includes, a plurality of transmission terminals each of which has an encoder which performs encoding processing with respect to an input video signal, and transmits a video signal which is encoded, a time synchronization unit which synchronizes the plurality of transmission terminals, and a managing unit which receives connection information of reception terminals to be connected from a reception side, instructs connections by transmitting the connection information to the plurality of transmission terminals, informs the plurality of transmission terminals of an encoding start time, and informs the reception side of a decoding start time.

The image transmission device according to the embodiment of the present technology includes a plurality of transmission terminals, and for example, configures a video delivery system. Each of the transmission terminals includes an encoder which performs the encoding processing with respect to an input video signal. For example, the input video signals of the plurality of transmission terminals are video signals which are necessary for a predetermined image display, and are related to each other. Here, the predetermined image display is a display of a stereoscopic image such as a stereogram, a high resolution image display such as 4K2K, or the like.

The plurality of transmission terminals is synchronized by the time synchronization unit. For example, in the time synchronization unit, the plurality of transmission terminals is synchronized using a clock synchronization protocol which is defined in IEEE 1588. In addition, the connection information of the reception terminals to be connected is received from the reception side by the managing unit. For example, in the managing unit, a connection request is transmitted to the reception side, and a connection response including the connection information of the reception terminals to be connected is received from the reception side. The managing unit instructs connections by transmitting the connection information to the plurality of transmission terminals. In addition, the managing unit informs the plurality of transmission terminals of the encoding start time, and transmits the decoding start time to the reception side.

In this manner, according to the embodiment of the present technology, the plurality of transmission terminals is synchronized. In addition, the plurality of transmission terminals simultaneously starts the encoding processing at the informed encoding start time. In addition, the decoding start time is transmitted to the reception side. For this reason, the decoding processing is started at the decoding start time which is transmitted from the transmission side, in a plurality of reception terminals on the reception side. For this reason, when the plurality of reception terminals are synchronized, it is possible to reproduce the streaming without a frame shift in the plurality of reception terminals.

A video reception device according to another embodiment of the present technology which includes, a plurality of reception terminals each of which receives a video signal which has been encoded, and has a decoder which obtains an output video signal by performing decoding processing with respect to the video signal, a time synchronization unit which synchronizes the plurality of reception terminals, and a managing unit which transmits connection information of the reception terminals to be connected to the transmission side, receives the decoding start time from the transmission side, and informs the plurality of reception terminals of the decoding start time.

The video reception device according to the embodiment of the present technology includes the plurality of reception terminals each of which receive a video signal which is encoded, and for example, configures a video delivery system. Each of the reception terminals includes a decoder which performs decoding processing with respect to the received video signal, and obtains an output video signal. For example, the output video signals which are obtained in the plurality of reception terminals are video signals which are necessary for a predetermined image display, and are related to each other. Here, the predetermined image display is a display of a stereoscopic image such as stereogram, a high resolution image display such as 4K2K, or the like.

The plurality of reception terminals is synchronized by the time synchronization unit. For example, in this time synchronization unit, the plurality of reception terminals is synchronized using a clock synchronization protocol which is defined in IEEE 1588. In addition, the connection information of the reception terminals to be connected is transmitted to the transmission side by the managing unit. For example, in the managing unit, a connection request is received from the transmission side, and a connection response including the connection information of the reception terminals to be connected is transmitted to the transmission side. The managing unit informs the plurality of reception terminals of the decoding start time by receiving the decoding start time from the transmission side.

In this manner, according to the embodiment of the present technology, the plurality of reception terminals is synchronized. In addition, in the plurality of reception terminals, decoding processing is started at the decoding start time which is transmitted from the transmission side. For this reason, when the plurality of transmission terminals on the transmission side is synchronized, and the encoding processing is started at the same time, it is possible to reproduce the streaming without a frame shift in the plurality of reception terminals.

According to the embodiment of the present technology, it is possible to solve the problem of synchronization when the plurality of video signals is streamed using a plurality of lines. In addition, according to the embodiment of the present technology, it is possible to increase the number of lines in a scalable way as a plurality of image signals are sent, and there are a plurality of terminals (input and receiving) being used. In addition, according to the embodiment of the present technology, since a plurality of lines are used in order to transmit a plurality of video signals, it is possible to use inexpensive lines like thick lines of high quality.

### BRIEF DESCRIPTION OF THE DRAWINGS

Embodiments of the invention are now described with reference to the enclosed drawings, throughout which like parts are referred to be like references, and in which
Fig. 1 is a block diagram which shows a configuration example of a transmission terminal which is arranged on a transmission side of a video delivery system.
Fig. 2 is a block diagram which shows a configuration example of a reception terminal which is arranged on the reception side of the video delivery system.
Fig. 3 is a block diagram which shows a configuration example of a video transmission device which is arranged on the transmission side of the video delivery system according to embodiments of the present technology.
Fig. 4 is a diagram which describes a basic sequence of IEEE 1588.
Fig. 5 is a block diagram which shows a configuration example of a video reception device which is arranged on the reception side of the video delivery system according to the embodiments of the present technology.
Fig. 6 is a sequence diagram (1/4) which describes the operation of the video delivery system (video transmission device and video reception device) according to the embodiments of the present technology.
Fig. 7 is a sequence diagram (2/4) which describes the operation of the video delivery system (video transmission device and video reception device) according to the embodiments of the present technology.
Fig. 8 is a sequence diagram (3/4) which describes the operation of the video delivery system (video transmission device and video reception device) according to the embodiments of the present technology.
Fig. 9 is a sequence diagram (4/4) which describes the operation of the video delivery system (video transmission device and video reception device) according to the embodiments of the present technology.
Figs. 10A and 10B are diagrams which describe a Side-by-Side method and a Top-and-Bottom method as transmission methods of the stereoscopic video signal.

### DETAILED DESCRIPTION OF EMBODIMENTS

Hereinafter, embodiments for embodying the disclosure (hereinafter, referred to as embodiments) will be described. In addition, the descriptions will be made in the following order.
1. Embodiment
2. Modified example

### 1. Embodiment

### Configuration of video delivery system

First, an example of a video delivery system according to the present technology will be described. The video delivery system is an example in which a left eye video signal and a right eye video signal which configure a stereoscopic video signal are delivered using two lines.

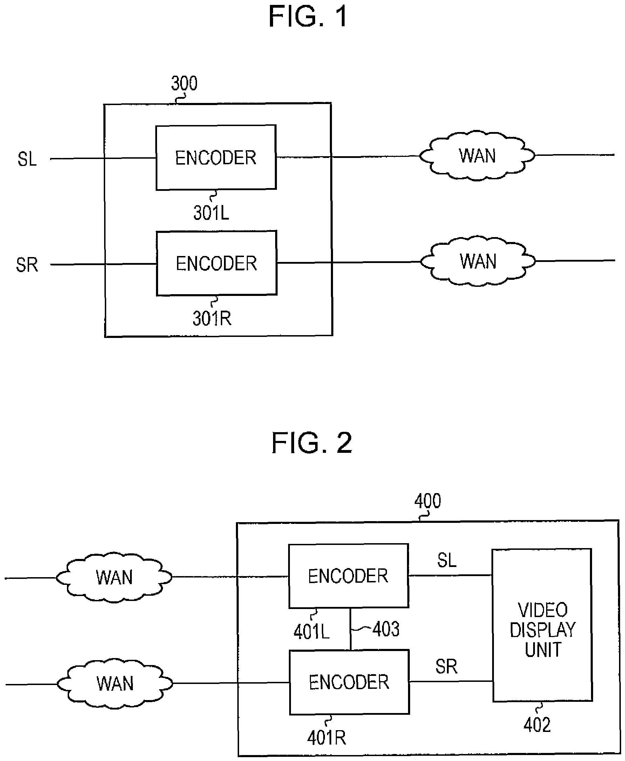

Fig. 1 is a configuration example of a transmission terminal 300 which is arranged on the transmission side of the video delivery system. The transmission terminal 300 includes encoders 301L and 301R. The encoders 301L and 301R respectively perform encoding processing with respect to a left eye video signal SL and a right eye video signal SR which are input from a video camera (not shown), and are synchronized with each other. In this case, the encoders 301L and 301R cause a clock of a codec to operate at a synchronized timing of the input video signal, and are synchronized with each other. The transmission terminal 300 transmits the encoded left eye video signal and right eye video signal which are obtained in the encoders 301L and 301R, respectively, via a WAN (Wide Area Network) line such as the Internet and an NGN to the reception side.

Fig. 2 shows a configuration example of a reception terminal 400 which is arranged on the reception side of the video delivery system. The reception terminal 400 includes decoders 401L and 401R, and an image display unit 402. The reception terminal 400 receives the left eye video signal and the right eye video signal which are transmitted from the transmission side via the WAN (Wide Area Network) line such as the Internet and an NGN, and are subject to encoding processing. The decoders 401L and 401R respectively perform the decoding processing with respect to the received left eye video signal and right eye video signal.

The decoders 401L and 401R are synchronized with each other by sharing an operation clock using a physical clock synchronization line 403. In this case, for example, the decoders 401L and 401R are synchronized by sharing the clock, by inputting the clock of the decoder 401L into the decoder 401R through the clock synchronization line 403.

An image display unit 402 displays an image for displaying a stereoscopic image on a display (not shown), on the basis of the left eye video signal SL and the right eye video signal SR which are obtained in the decoders 410L and 410R. For example, when it is a shutter glasses system, the left eye image and the right eye image of each frame are alternately displayed.

The plurality of encoders and decoders are included in the same terminal, in the transmission terminal 300 and the reception terminal 400 which configure the video delivery system shown in Figs. 1 and 2. For this reason, it is possible to guarantee that the synchronization of the left eye video signal and the right eye video signal are not shifted, by causing the encoding and decoding to be started at the same time, using the same clock. In addition, it is possible to manage signaling, since a plurality of lines is terminated in the same terminal in the transmission terminal 300 and the reception terminal 400.

### Description of embodiment

Subsequently, a video delivery system as an embodiment of the present technology will be described. The video delivery system is an example where the left eye video signal and the right eye video signal which configure the stereoscopic video signal is delivered using two lines. The video delivery system is configured by a video transmission device 100 which is arranged on the transmission side, and a video reception device 200 which is arranged on the reception side.

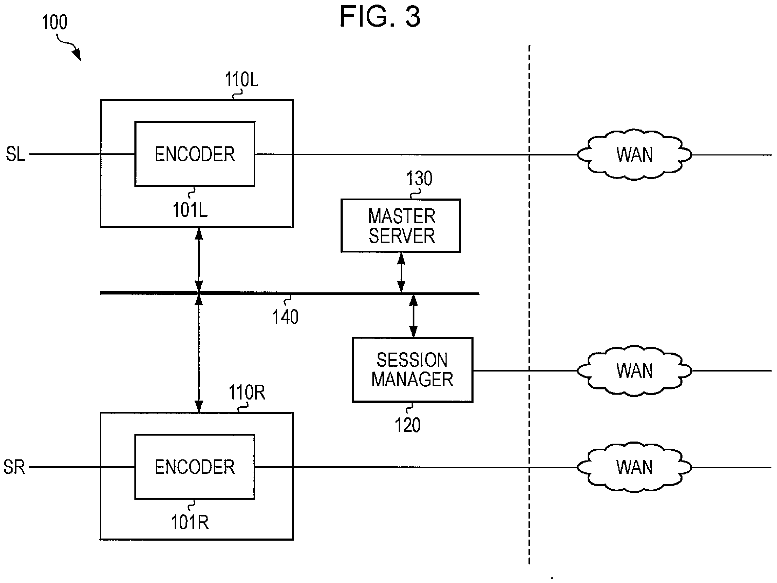

Fig. 3 shows a configuration example of the video transmission device 100 which is arranged on the transmission side of the video delivery system. The video transmission device 100 includes transmission terminals 110L and 110R, a session manager 120, and a master server 130. The transmission terminals 110L and 110R, a session manager 120, and a master server 130 are connected to each other through a LAN line 140. Here, the session manager 120 configures a managing unit, and the master server 130 configures a time synchronization unit.

The transmission terminals 110L and 110R respectively include encoders 101L and 101R. The encoders 101L and 101R respectively perform the encoding processing with respect to the left eye video signal SL and the right eye video signal SR which are synchronized with each other, and are input from a video camera which is not shown. The transmission terminals 110L and 110R respectively transmit the left eye video signal and the right eye video signal which are respectively obtained in the encoders 101L and 101R, and encoded, to the reception side through the WAN (Wide Area Network) line such as the Internet and the NGN.

The master server 130 synchronizes the transmission terminals 110L and 110R, and the session manager 120. The master server 130 configures a master in the clock synchronization protocol which is defined in IEEE 1588. In addition, the transmission terminals 110L and 110R, and the session manager 120 configure a slave thereof. That is, the master server 130 synchronizes the transmission terminals 110L and 110R, and the session manager 120, using the clock synchronization protocol which is defined in IEEE 1588. It is possible to perform accurate time synchronization from nanoseconds to hundreds of microseconds in the clock synchronization which is defined in IEEE 1588.

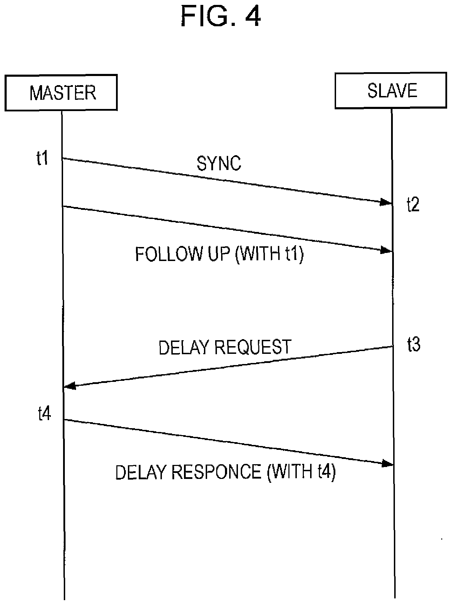

Here, the basic sequence of IEEE 1588 will be described. First, the operation of the master and the slave will be described with reference to FIG. 4.
(1) The master records time t1 when sending out sync
(2) The slave records received time t2
(3) The master records the time t1 when the sync was sent out in follow up, and transmits
(4) The slave compares the times t1 and t2 which are described in the received follow up, and calculates the difference
(5) The slave corrects time information of the slave, on the basis of the difference calculated above
(6) The slave records time t3 when sending out a delay request
(7) The master records time t4 at which the delay request was received
(8) The master records the time t4 at which the delay request was received in the delay response and sends the delay response
(9) The slave calculates a delay time of a network on the basis of the time t4 which was recorded in the received delay response, and the time t3, and calculates the difference
(10) The slave corrects time information of the slave on the basis of the difference which is calculated in the above, and the master and the slave transmit and receive the above messages periodically, and stay in synchronization.

Returning to Fig. 3, the session manager 120 makes a connection reservation for confirming whether or not the transmission terminals 110L and 110R are available when transmitting the left eye video signal SL and the right eye video signal SR which configure the stereoscopic video signal to the reception side. In addition, the session manager 120 transmits the connection request to the reception side via the WAN line when the transmission terminals 110L and 110R are available. The WAN line is a separate line from the WAN line which transmits the video signal. This connection request includes additional information, such as the fact that the transmitted video signal is the left eye video signal and the right eye video signal which configure the stereoscopic video signal, the desired number of lines to be used, bit rate, and the like.

In addition, the session manager 120 receives a connection response including connection information (IP address, phone number, or the like) of a reception terminal to be connected from the reception side. In addition, the session manager 120 instructs a connection by transmitting the connection information to the transmission terminals 110L and 110R, and informs the transmission terminals of the encoding start time. In this manner, the transmission terminals 110L and 110R respectively connect to a corresponding reception terminal on the reception side via the WAN line on the basis of the connection information. In addition, transmission terminals 110L and 110R simultaneously start the encoding processing from the informed encoding start time, and start transmitting the processed left eye video signal and the right eye video signal to the reception side via the WAN line.

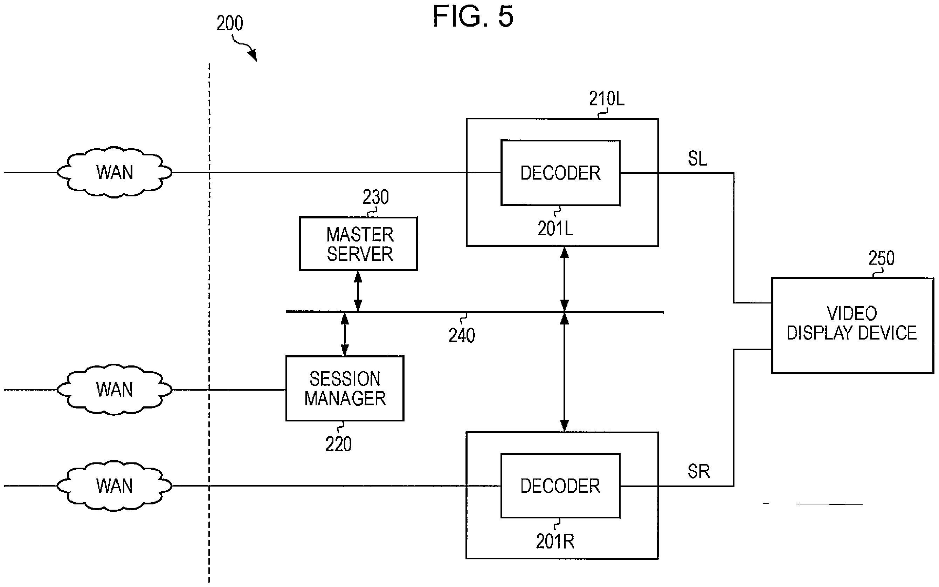

Fig. 5 shows a configuration example of a video reception device 200 which is arranged on the reception side of the video delivery system. This video reception device 200 includes reception terminals 210L and 210R, a session manager 220, a master server 230, and an image display device 250. The reception terminals 210L and 210R, a session manager 220, a master server 230, and an image display device 250 are connected to each other via a LAN line 240. Here, the session manager 220 configures a managing unit, and the master 230 configures a time synchronization unit.

The reception terminals 210L and 210R respectively have decoders 201L and 201R. The reception terminals 210L and 210R respectively receive the left eye video signal and the right eye video signal which are encoded, and are transmitted from the reception side, via a WAN (Wide Area Network) line such as the Internet and an NGN. The decoders 201L and 201R respectively perform decoding processing with respect to the left eye video signal and the right eye video signal.

The image display device 250 inputs the left eye video signal SL and the right eye video signal SR which are obtained in the reception terminals 210L and 210R, and displays an image for displaying the stereoscopic image on a display which is not shown. For example, when it is the shutter glass system, the image display device displays the left eye image and right eye image of each frame alternately.

The master server 230 synchronizes the reception terminals 210L and 210R, and the session manager 220. The master server 230 configures a master in the clock synchronization protocol which is defined in IEEE 1588, similarly to the master server 130 of the above described video transmission device 100 (refer to Fig. 3). In addition, the reception terminals 210L and 210R, and the session manager 220 configure a slave thereof. That is, the master server 230 synchronizes the reception terminals 210L and 210R, and the session manager 220 using the clock synchronization protocol which is defined in IEEE 1588 (refer to Fig. 4).

The session manager 220 receives a connection request which is transmitted from the transmission side via the WAN line. As described above, this connection request includes information such as the bit rate of the transmission video signal, the desirable number of lines to be used, and the fact that the transmission video signal is the left eye video signal or the right eye video signal. In addition, the session manager 220 performs a connection reservation for confirming whether or not the reception terminals 210L and 210R are available when receiving the above described connection request.

In addition, the session manager 220 transmits a connection response including connection information (IP address, phone number, or the like) of the reception terminal to be connected, that is, the reception terminals 210L and 210R to the transmission side, via the WAN line, when the reception terminals 210L and 210R are available. In addition, the session manager 220 receives the decoding start time which is transmitted from the transmission side via the WAN line. Further, the session manager 220 informs the reception terminals 210L and 210R of the decoding start time. In this manner, the reception terminals 210L and 210R simultaneously start the decoding processing from the informed decoding start time, and transmit the decoded left eye video signal and right eye video signal to the image display device 250.

### Operation of video delivery system according to the embodiment

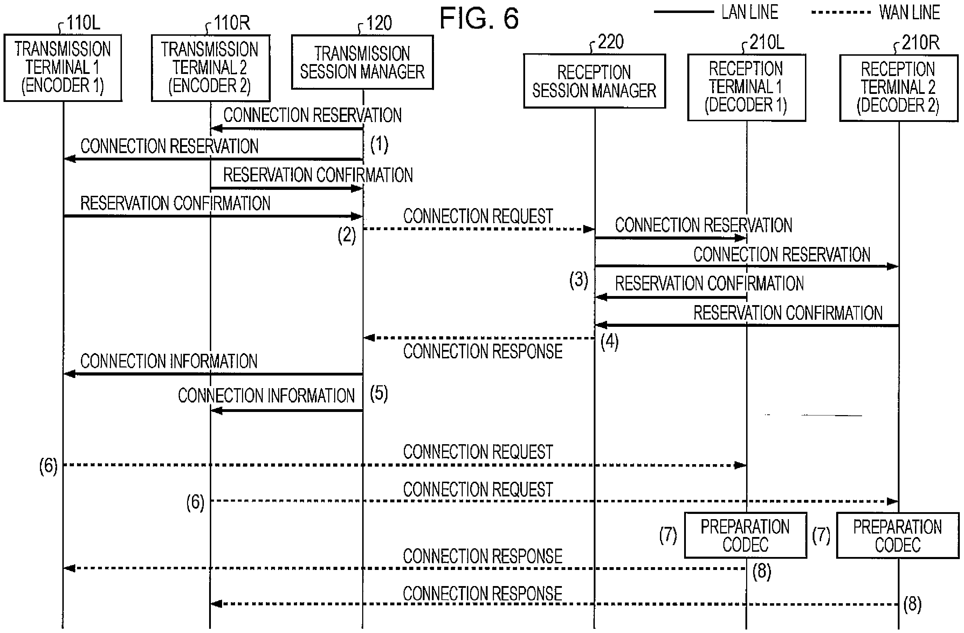

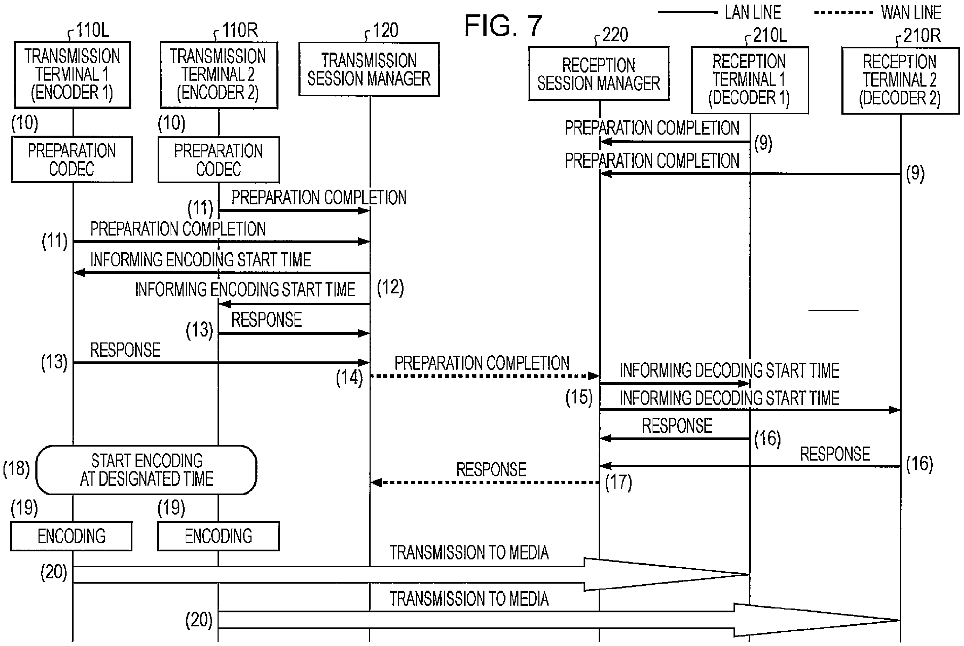

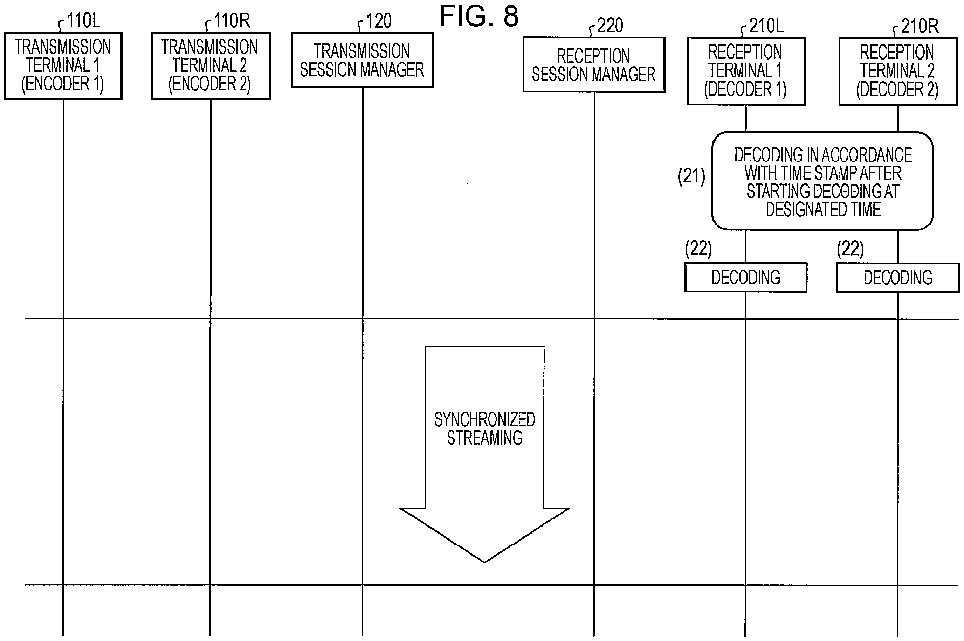

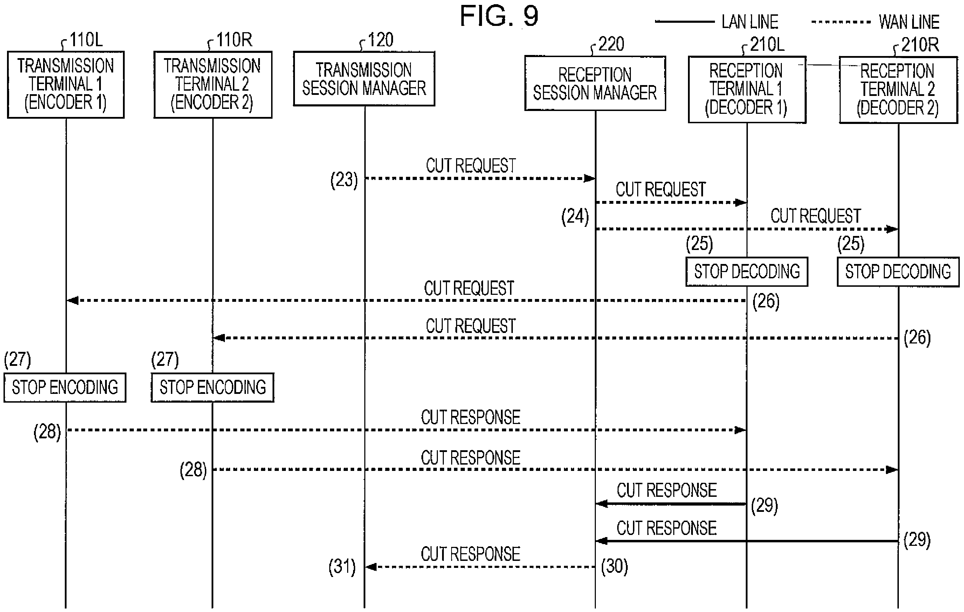

The operation of the video delivery system which is configured by the video transmission device 100 shown in Fig. 3 and the video reception device 200 shown in Fig. 5 will be described with reference to sequence diagrams in Figs. 6 to 9.
(1) The session manager 120 of the video transmission device 100 makes a connection reservation for confirming whether or not the transmission terminals 110L and 110R to be used are available, when transmitting the left eye video signal SL and the right eye video signal SR which configure the stereoscopic video signal to the reception side. The transmission terminals 110L and 110R respectively transmit a reservation confirmation to the session manager 120 when they are in a usable state. In this manner, it is possible for the session manager 120 to avoid a problem in that the transmission terminals 110L and 110R are determined not to be available after performing signaling, or the like, by making the reservation for the transmission terminals 110L and 110R which are used, using the LAN line 140.
(2) The session manager 120 transmits a connection request to the reception side via the WAN line when receiving the reservation confirmation from the transmission terminals 110L and 110R, that is, when the transmission terminals 110L and 110R are available. The session manager 120 includes additional information in the connection request such as the fact that the transmission video signal is the left eye video signal or the right eye video signal which configure the stereoscopic video signal, the desirable number of lines to be used, the bit rate, and the like.
(3) The session manager 220 of the video reception device 200 receives a connection request which is transmitted from the transmission side via the WAN line. As described above, this connection request includes additional information in the connection request such as the fact that the transmission video signal is the left eye video signal or the right eye video signal which configure the stereoscopic video signal, the desirable number of lines to be used, the bit rate, and the like. In addition, the session manager 220 makes a connection reservation for confirming whether or not the reception terminals 210L and 210R to be used are available. The reception terminals 210L and 210R respectively transmit a reservation confirmation to the session manager 220 when they are available. In this manner, the session manager 220 is able to avoid the problem that the reception terminals 210L and 210R to be used are determined not to be available after performing signaling, or the like, by making the reservation for the reception terminals 210L and 210R to be used, using the LAN line 240.
(4) The session manager 220 transmits a connection response to the transmission side via the WAN line when the reservation confirmation is received from the reception terminals 210L and 210R to be used, that is, when the reception terminals 210L and 210R are available. The session manager 220 includes connection information (IP address, phone number, or the like) of the reception terminals to be connected, that is, the reception terminals 210L and 210R to be used, in the connection response.
(5) The session manager 120 on the transmission side receives the connection response which is transmitted from the reception side via the WAN line. As described above, the connection response includes the connection information (IP address, phone number, or the like) of the reception terminals to be connected, that is, the reception terminals 210L and 210R. In addition, the session manager 120 instructs a connection by transmitting the connection information to the transmission terminals 110L and 110R.
(6) The transmission terminals 110L and 110R respectively transmit a connection request to the reception terminals 210L and 210R on the reception side via the WAN line, on the basis of the connection information which is informed from the session manager 120.
(7) The reception terminals 210L and 210R on the reception side which received the connection request from the transmission terminals 110L and 110R on the transmission side respectively prepare the codec. (8) The reception terminals 210L and 210R transmit a connection response to the transmission terminals 110L and 110R on the transmission side via the WAN line after completing a preparation of the codec. (9) In addition, the reception terminals 210L and 210R transmit a response of a preparation completion to the session manager 220, using the LAN line after completing the preparation of the codec.
(10) The transmission terminals 110L and 110R on the transmission side which have received the connection response from the reception terminals 210L and 210R on the reception side respectively prepare the codec. (11) In addition, the transmission terminals 110L and 110R transmit the response of the preparation completion to the session manager 120 using the LAN line after completing the preparation of the codec.
(12) The session manager 120 informs the transmission terminals 110L and 110R of the encoding start time (designated time) based on the time of IEEE 1588 to the transmission terminals 110L and 110R using the LAN line, after both the transmission terminals 110L and 110R are ready. (13) The transmission terminals 110L and 110R respectively transmit the response to the session manager 120 when the encoding start time is informed from the session manager 120.
(14) The session manager 120 transmits the fact that the transmission side is ready to the session manager 220 on the reception side via the WAN line when there is a response to the information of the encoding start time from both the transmission terminals 110L and 110R. In addition, at this time, the session manager 120 simultaneously transmits the decoding start time (designated time) based on the time of IEEE 1588 to the session manager 220 on the reception side.
(15) The session manager 220 on the reception side receives information on the fact that the transmission side is ready which is transmitted from the transmission side via the WAN line, and the decoding start time. In addition, the session manager 220 informs the reception terminals 210L and 210R of the decoding start time using the LAN line. (16) The reception terminals 210L and 210R respectively transmit the response to the session manager 220 when the decoding start time is informed from the session manager 220. (17) The session manager 220 transmits the response to the session manager 120 on the transmission side via the WAN line when there is a response to the information of the decoding start time from both the reception terminals 210L and 210R.
(18) The transmission terminals 110L and 110R on the transmission side starts the encoding at the designated time (encoding start time) of IEEE 1588, (19) and starts the encoding processing with respect to the left eye video signal SL and the right eye video signal SR. (20) In addition, the transmission terminals 110L and 110R respectively start streaming to the reception terminals 210L and 210R on the reception side via the WAN line by providing a time stamp to the encoded left eye video signal and the right eye video signal, on the basis of IEEE 1588. The reception terminals 210L and 210R on the reception side start to receive the stream.
(21) The reception terminals 210L and 210R on the reception side start the decoding when it becomes the designated time (decoding start time) of IEEE 1588. (22) In addition, hereinafter, the reception terminals 210L and 210R perform the decoding processing simultaneously with the time stamp which is provided at the time of encoding, and sequentially obtain the left eye video signal SL and the right eye video signal SR of each frame. In this manner, the stereoscopic image display is started by the left eye video signal SL and the right eye video signal SR in the image display device 250 on the reception side.
(23) When delivery of the video is disconnected, the session manager 120 on the transmission side transmits the disconnection request to the session manager 220 on the reception side via the WAN line. (24) The session manager 220 which received the disconnection request transmits the disconnection request to the reception terminals 210L and 210R through the LAN line 240. (25) The reception terminals 210L and 210R which received the disconnection request respectively stop the decoding processing.
(26) In addition, the reception terminals 210L and 210R on the reception side respectively transmit the disconnection request to the transmission terminals 110L and 110R on the transmission side via the WAN line. (27) The transmission terminals 110L and 110R on the transmission side which received the disconnection request respectively stop the encoding processing. (28) In addition, the transmission terminals 110L and 110R respectively transmit a disconnection response to the reception terminals 210L and 210R on the reception side via the WAN line.
(29) The reception terminals 210L and 210R on the reception side which received the disconnection response transmit the disconnection response of being properly disconnected to the session manager 220 through the LAN line 240. (30) The session manager 220 which received the disconnection response from both the reception terminals 210L and 210R transmit the disconnection response to the session manager 120 on the transmission side via the WAN line, and returns to the initial state by performing the necessary processing. (31) The session manager 120 on the transmission side which received the disconnection response from the session manager 220 on the reception side returns to the initial state by performing necessary processing.

In addition, the above described sequence diagram in Figs. 6 to 9 shows a state where initially the disconnection request is transmitted to the video reception device 200 from the video transmission device 100, when the delivery of the video is disconnected. However, in contrast to this, a case may be considered in which the disconnection request is transmitted to the video transmission device 100 from the video reception device 200, when the delivery of the video is disconnected. Detailed description is omitted here, however, the disconnection is performed using the same sequence even in that case.

As described above, in the video transmission device 100 shown in Fig. 3, the transmission terminals 110L and 110R synchronized using the clock synchronization protocol which is defined in IEEE 1588, by the master server 130. In addition, the encoding start time (designated time) based on the time of IEEE 1588 is informed to the transmission terminals 110L and 110R from the session manager 120. In addition, the encoding processing with respect to the left eye video signal SL and the right eye video signal SR is started when it becomes the designated time (encoding start time) of IEEE 1588, in the transmission terminals 110L and 110R, respectively. Further, the time stamp is provided to the encoded left eye video signal and right eye video signal on the basis of IEEE 1588, and streaming is performed to the reception terminals 210L and 210R on the reception side via the WAN line.

In addition, in the video reception device 200 shown in Fig. 5, the reception terminals 210L and 210R are synchronized using the clock synchronization protocol which is defined in IEEE 1588, by the master server 230. In addition, the decoding start time (designated time) based on the time of IEEE 1588 transmitted from the transmission side is informed to the reception terminals 210L and 210R from the session manager 220. In the reception terminals 210L and 210R, the decoding is started when it becomes the designated time (decoding start time) of IEEE 1588. In addition, the decoding processing is performed with respect to the encoded left eye video signal and the right eye video signal which are transmitted from the transmission side by being synchronized with the time stamp which is provided at the time of the encoding, and the left eye video signal SL and the right eye video signal SR of each frame are sequentially obtained.

For this reason, in the reception terminals 210L and 210R on the reception side, it is possible to respectively reproduce the streaming of the left eye video signal SL and the right eye video signal SR without a frame shift. Accordingly, it is possible to solve the synchronization problem which is caused when the left eye video signal SL and the right eye video signal SR which configure the stereoscopic video signal are streamed using two WAN lines, in the video delivery system which is configured by the video transmission device 100 shown in Fig. 3, and the video reception device 200 shown in Fig. 5.

### 2. Modified example

In addition, in the above described embodiment, the video transmission device 100 is configured by the session manager 120 and the master server 130, in addition to the transmission terminals 110L and 110R, and these are connected to each other through the LAN line 140. However, a configuration may be considered in which any one of the transmission terminals 110L and 110R doubles as the master server 130, or the session manager 120 doubles as the master server 130. In addition, a configuration may be considered in which any one of the transmission terminals 110L and 110R doubles as the session manager 120. Detailed description will be omitted, however, this is the same case as that of the video reception device 200.

In addition, in the above described embodiment, an example was shown in which the left eye video signal SL and the right eye video signal SR which configure the stereoscopic video signal are delivered using two WAN lines. The present technology can be similarly applied to a case where video signals which are necessary for a predetermined image display, and are related to each other are delivered using a plurality of lines. For example, it may be similarly applied to a case where a video signal of 4K2K is divided into four video signals of full HD, and is delivered. In the present technology, a plurality of terminals (transmission terminal and reception terminal) for transmitting a plurality of video signals using a plurality of lines is used, and it is possible to increase the number of lines in a scalable way. In addition, in the present technology, the plurality of lines for transmitting the plurality of video signals is used, and it is possible to use inexpensive lines like thick lines of high quality.

The present disclosure contains subject matter related to that disclosed in Japanese Priority Patent Application JP 2011-049856 filed in the Japan Patent Office on March 8, 2011, the entire contents of which are hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. An image transmission device comprising:
a plurality of transmission terminals which has an encoder which performs encoding processing with respect to an input video signal, and transmits a video signal which is encoded;
a time synchronization unit which synchronizes the plurality of transmission terminals; and
a managing unit which receives connection information of a reception terminal to be connected from a reception side, instructs a connection by transmitting the connection information to the plurality of transmission terminals, informs the plurality of transmission terminals of an encoding start time, and informs the reception side of a decoding start time.

2. The image transmission device according to claim 1,
wherein the managing unit transmits a connection request to the reception side, and receives a connection response including the connection information of the reception terminals to be connected from the reception side.

3. The image transmission device according to claim 1 or 2,
wherein an input video signal of the plurality of transmission terminals is video signals which are necessary for a predetermined image display, and are related to each other.

4. The image transmission device according to claim 3,
wherein the predetermined image display is a stereoscopic image display.

5. The image transmission device according to claim 3,
wherein the predetermined image display is a high resolution image display.

6. The image transmission device according to one of the claims 1 to 4,
wherein the time synchronization unit synchronizes the plurality of terminals using a clock synchronization protocol which is defined in IEEE 1588.

7. A control method of a video transmission device which has a plurality of transmission terminals each of which has an encoder which performs encoding processing with respect to an input video signal, and transmits an encoded video signal, the control method comprising:
synchronizing the plurality of transmission terminals;
receiving connection information of a reception terminal to be connected from a reception side;
instructing connections by transmitting the connection information which is received when receiving the connection information to the plurality of transmission terminals;
informing the plurality of transmission terminals of an encoding start time; and
transmitting a decoding start time to the reception side.

8. A video reception device comprising:
a plurality of reception terminals each of which receives a video signal which is encoded, and has a decoder which obtains an output video signal by performing decoding processing with respect to the video signal;
a time synchronization unit which synchronizes the plurality of reception terminals; and
a managing unit which transmits connection information of the reception terminals to be connected to a transmission side, receives a decoding start time from the transmission side, and informs the plurality of reception terminals of the decoding start time.

9. The video reception device according to claim 8,
wherein the managing unit receives a connection request from the transmission side, and transmits connection responses including the connection information of the reception terminals to be connected to the transmission side.

10. A control method of a video reception device which includes a plurality of reception terminals each of which receives a video signal which is encoded, and obtains an output video signal by performing decoding processing with respect to the video signal, the method comprising:
synchronizing the plurality of reception terminals;
transmitting connection information of reception terminals to be connected to a transmission side;
receiving a decoding start time from the transmission side; and
informing the plurality of reception terminals of the decoding start time which is received when receiving the decoding start time.
